(19) Europäisches Patentamt / European Patent Office / Office européen des brevets

(11) **EP 3 873 961 B1**

(12) **EUROPEAN PATENT SPECIFICATION**

(45) Date of publication and mention
of the grant of the patent:
**17.08.2022 Bulletin 2022/33**

(21) Application number: **19791267.8**

(22) Date of filing: **25.10.2019**

(51) International Patent Classification (IPC):
***C08G 18/76*** *(2006.01)*   ***C08G 18/00*** *(2006.01)*
***C08G 18/22*** *(2006.01)*

(52) Cooperative Patent Classification (CPC):
**C08G 18/003; C08G 18/225; C08G 18/7621**

(86) International application number:
**PCT/EP2019/079250**

(87) International publication number:
**WO 2020/089104 (07.05.2020 Gazette 2020/19)**

(54) **METHOD FOR THE PRODUCTION OF THERMOPLASTIC POLYOXAZOLIDINONE POLYMERS**

VERFAHREN ZUR HERSTELLUNG VON THERMOPLASTISCHEN
POLYOXAZOLIDINONPOLYMEREN

PROCÉDÉ DE PRODUCTION DE POLYMÈRES DE POLYOXAZOLIDINONE
THERMOPLASTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2018 EP 18203461**

(43) Date of publication of application:
**08.09.2021 Bulletin 2021/36**

(73) Proprietor: **Covestro Intellectual Property GmbH
& Co. KG
51373 Leverkusen (DE)**

(72) Inventors:
  • **KOOPMANS, Carsten
    40723 Hilden (DE)**
  • **LAEMMERHOLD, Kai
    52078 Aachen (DE)**
  • **GÜRTLER, Christoph
    50735 Köln (DE)**
  • **FRICK-DELAITTRE, Elena
    50679 Köln (DE)**
  • **WOLF, Aurel
    42489 Wülfrath (DE)**
  • **SIMON, Joachim
    41515 Grevenbroich (DE)**
  • **WANG, Min
    00950 Helsinki (FI)**
  • **THIEL, Daniel
    51375 Leverkusen (DE)**
  • **LEITNER, Walter
    52074 Aachen (DE)**

(74) Representative: **Levpat
    c/o Covestro AG
    Gebäude 4825
    51365 Leverkusen (DE)**

(56) References cited:
**US-A1- 2010 298 520**

**Description**

A process for producing thermoplastic polyoxazolidinone comprising copolymerization of a diisocyanate compound (A) with a bisepoxide compound (B) in the presence of a catalyst (C) and a compound (D) in a solvent (E), wherein the bisepoxide compound (B) comprises isosorbide diglycidylether,wherein the catalyst (C) is selected from the group consisting of alkali halogenides and earth alkali halogenides, and transition metal halogenides, compound (D) is selected from the group consisting of monofunctional isocyanate, monofunctional epoxide, and wherein the process comprises step ($\alpha$) of placing the solvent (E) and the catalyst (C) in a reactor to provide a mixture, and adding the diisocyanate compound (A), the bisepoxide compound (B) and the compound (D) in step ($\beta$) to the mixture resulting from the step ($\alpha$). The invention is also related to the resulting thermoplastic polyoxazolidinone.

Oxazolidinones are widely used structural motifs in pharmaceutical applications and the cycloaddition of epoxides and isocyanates seems to be a convenient one-pot synthetic route to it. Expensive catalysts, reactive polar solvents, long reaction times and low chemoselectivities are common in early reports for the synthesis of oxazolidinones (M. E. Dyen and D. Swern, Chem. Rev., 67, 197, 1967). Due to these disadvantages there was the need for alternative methods for the production of oxazolidinones especially for application of oxazolidinones as structural motif in polymer applications.

EP 16703330.7 discloses thermoplastic polyoxazolidinones with thermal stability, a method for the production of thermoplastic polyoxazolidinones, comprising the step of reacting a biscarbamate or diisocyanate compound with a bisepoxide compound in the presence of a mono-carbamate, a mono-isocyanate and/or a mono-epoxide compound as chain regulator and a suitable base having a pKb value of $\leq 9$ as catalyst. Polyoxazolidinones are obtained by the polycondensation route, wherein biscarbamates and bisepoxides reacted in the presence of amine catalysts in batch mode or semi-batch mode. The chain group regulators were added in a second step.

In addition, one example discloses the polyoxazolidinone formation by polyaddition route, wherein the diisocyanate compound is added in a semi-batch process to the mixture of a bisepoxide compound and the catalyst. After 16 h a monofunctional isocyanate compound was added to the polyoxazolidinone mixture. The overall reaction time was 22 hours.

The patent application WO 2018/141743 A1 discloses a method for the production of thermoplastic polyoxazolidinones with slightly increased dynamic viscosity and also increased thermal stability by controlling the regioselectivity of the 5-oxazolidinone and 4-oxazolidinone regioisomers. The polyoxazolidinones are obtained by the polycondensation route which comprises at least one biscarbamate compound with at least one bisepoxide compound in the presence of at least one base, at least one Lewis acid catalyst, and optionally at least one chain group regulator, wherein the chain group regulator comprising a mono-carbamate group, a mono-isocyanate group and/or a mono-epoxide group, and wherein the base having a pKb-value of $\leq 9$. In a first step the biscarbamate compound is reacted with the bisepoxide compound in the presence of a base and a Lewis acid catalyst in batch process followed by the addition of a monofunctional chain group regulator in a second step.

The scientific publication J. Polym. Sci. 8 (1970) 2759-2773 discloses polyoxazolidinones prepared from various bisepoxides and various diisocyanates in the presence of alkaline metal halogenide catalysts. A solution of equimolar bisepoxide and diisocyanate amounts is added dropwise to a reactor containing a LiCl catalyst dissolved in DMF under reflux conditions within 1 h and a subsequent post reaction of 12 to 23 h was carried out under reflux conditions in order to complete the reaction. The addition of monofunctional chain-group regulators is not disclosed.

Objective of the present invention was therefore to identify an optimized and simple process for the preparation of thermoplastic polyoxazolidinones with improved thermal stability than the already known thermoplastic polyoxazolidinones by the polyaddition route and especially to develop suitable process conditions. The high thermal stability of the synthesized thermoplastic polyoxazolidinones at temperatures up to 240 °C to 260 °C for several minutes is crucial for subsequent extrusion and injection molding processes that need to be carried out above the glass transition temperature of the thermoplastic polyoxazolidinone materials.

In addition, the latter process conditions should enable a high reactivity and reduce the reaction time to already known processes for the preparation of thermoplastic polyoxazolidinones by the polyaddition route to establish an economic process and a high selectivity towards thermoplastic polyoxazolidinone formation to minimize costs for downstreaming and optimize the performance of resulting thermoplastic polyoxazolidinones. Due to the reduced number of side products that can decompose and/or evaporate during subsequent extrusion and injection molding processes compared to the known system higher thermostability (higher decomposition temperature $T_{Donset}$) than the already known thermoplastic polyoxazolidinones should be obtained.

Surprisingly, it has been found that the problem can be solved by a process for producing thermoplastic polyoxazolidinones comprising copolymerization of a diisocyanate compound (A) with a bisepoxide compound (B) in the presence of a catalyst (C) and a compound (D) in a solvent (E), wherein the bisepoxide compound (B) comprises isosorbide diglycidylether, wherein catalyst (C) is selected from the group consisting of alkali halogenides and earth alkali halogenides, and transition metal halogenides, compound (D) is selected from the group consisting of monofunctional isocyanate, monofunctional epoxide, and wherein the process comprises the following steps:

(α) placing the solvent (E) and the catalyst (C) in a reactor to provide a mixture, and
(β) adding the diisocyanate compound (A), the bisepoxide compound (B) and the compound (D) to the mixture resulting from step (α).

In an embodiment of the invention the diisocyanate compound (A), the bisepoxide compound (B) and the compound (D) of step (β) are added in a continuous manner to the mixture of step (α).

In an alternative embodiment of the invention the diisocyanate compound (A), the bisepoxide compound (B) and the compound (D) of step (β) are added in a step-wise manner to the mixture of step (α).

In an embodiment of the invention the diisocyanate compound (A), the bisepoxide compound (B) and the compound (D) are mixed prior the addition to the mixture resulting from step (α).

In an embodiment of the invention the mixture of the diisocyanate compound (A), the bisepoxide compound (B) and the compound (D) of step (β) are added in a continuous manner to the mixture of step (α).

In an alternative embodiment of the invention the mixture of the diisocyanate compound (A), the bisepoxide compound (B) and the compound (D) of step (β) are added in a step-wise manner with two or more individual addition steps to the mixture of step (α).

In an embodiment of the method according to the invention step (α) and/or step (β) is performed at reaction temperatures of ≥ 130 °C to ≤ 280 °C, preferably at a temperature of ≥ 140 °C to ≤ 240 °C, more preferred at a temperature of ≥ 155 °C to ≤ 210 °C. If temperatures below 130 °C are set, the reaction is generally very slow. At temperatures above 280 °C, the amount of undesirable secondary products increases considerably.

In an embodiment of the method according to the invention step (α) and/or step (β) is performed at reaction times of 1 h to 20 h, preferably at 1 h to 10 h and more preferably at 1h to 6 h.

In a preferred embodiment of the method according to the invention step (α) and step (β) is performed at reaction temperatures of ≥ 130 °C to ≤ 280 °C and a reaction time of 1 h to 6 h.

## Diisocyanate compound (A)

As used herein, the term "diisocyanate compound (A)" is meant to denote compounds having two isocyanate groups (I = 2, isocyanate-terminated biurets, isocyanurates, uretdiones, and isocyanate-terminated prepolymers).

In an embodiment of the method according to the invention the diisocyanate compound (A) is at least one compound selected from the group consisting of tetramethylene diisocyanate, hexamethylene diisocyanate (HDI), 2-methylpentamethylene diisocyanate, 2,2,4-trimethylhexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane (H12-MDI), diphenylmethane diisocyanate (MDI), 4,4'-diisocyanato-3,3'-dimethyldicyclohexylmethane, 4,4'-diisocyanato-2,2-dicyclohexyl propane, poly(hexamethylene diisocyanate), octamethylene diisocyanate, tolylene-α,4-diisocyanate, poly(propylene glycol) tolylene-2,4-diisocyanate terminated, poly(ethylene adipate) tolylene-2,4-diisocyanate terminated, 2,4,6-trimethyl-1,3-phenylene diisocyanate, 4-chloro-6-methyl-1,3-phenylene diisocyanate, poly[1,4-phenylene diisocyanate-co-poly(1,4-butanediol)] diisocyanate, poly(tetrafluoroethylene oxide-co-difluoromethylene oxide) a,ω-diisocyanate, 1,4-diisocyanatobutane, 1,8-diisocyanatooctane, 1,3-bis(1-isocyanato-1-methylethyl)benzene, 3,3'-dimethyl-4,4'-biphenylene diisocyanate, naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and α,α,α',α'-tetramethyl- m- or -p-xylene diisocyanate (TMXDI) or biurets, isocyanurates or uretdiones of the aforementioned isocyanates.

More preferred the diisocyanate compound (A) is selected from the group comprising of tolylene-α,4-diisocyanate, poly(propylene glycol) tolylene-2,4-diisocyanate terminated, 2,4,6-trimethyl-1,3-phenylene diisocyanate, 4-chloro-6-methyl-1,3-phenylene diisocyanate, 3,3'-dimethyl-4,4'-biphenylene diisocyanate, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and α,α,α',α'-tetramethyl- m- or -p-xylene diisocyanate (TMXDI), diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

And most preferred the diisocyanate compound (A) is selected from the group consisting of diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

A mixture of two or more of the aforementioned diisocyanate compounds (A) can also be used.

## Bisepoxide compound (B)

As used herein, the term "bisepoxide compound (B)" is meant to denote compounds having two epoxide groups (F = 2).

In a preferred embodiment of the invention the bisepoxide compound (B) is isosorbide diglycidylether and optionally at least one compound selected from the group consisting of resorcinol diglycidyl ether, neopentyl glycol diglycidyl ether, 1,6-hexanediol diglycidyl ether, 1,4-butandiol diglycidyl ether, hydrogenated bisphenol-A diglycidyl ether, bisphenol-A diglycidyl ether, bisphenol-F diglycidyl ether, bisphenol-S diglycidyl ether, 9,9-bis(4-glycidyloxy phenyl)fluorine, tetrabromo bisphenol-A diglycidyl ether, tetrachloro bisphenol-A diglycidyl ether, tetramethyl bisphenol-A diglycidyl ether, tetramethyl bisphenol-F diglycidyl ether, tetramethyl bisphenol-S diglycidyl ether, diglycidyl terephthalate, diglycidyl o-phthalate, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, butadiene diepoxide, vinylcyclohexene diepoxide, limonene diepoxide, the diepoxides of double unsaturated fatty acid C1 - C18 alkyl esters, 2-dihydroxybenzene diglycidyl ether, 1,4-dihydroxybenzene diglycidyl ether, 4,4'-(3,3,5-trimethylcyclohexyliden)bisphenyl diglycidyl ether and diglycidyl isophthalate.

More preferred the bisepoxide compound (B) is isosorbide diglycidylether and optionally at least one compound selected from the group consisting of resorcinol diglycidyl ether, bisphenol A diglycidyl ether, and bisphenol F diglycidyl ether.

Most preferred the bisepoxide compound (B) is isosorbide diglycidylether and optionally at least one compound selected from the group consisting of bisphenol A diglycidyl ether, and bisphenol F diglycidyl ether.

The molar ratio of isosorbide diglycidylether related to the sum of all bisepoxide compound (B) is from 0,1 mol-% to 100 mol-% preferably from 10 mol-% to 100 mol-% and most preferably from 5 mol-% to 60 mol-%. The latter preferred ratio of leads to a further increase of the thermal stability of the synthesized thermoplastic polyoxazolidinones at temperatures up to 240 °C to 280 °C.

A mixture of isosorbide diglycidylether and one or more of the aforementioned bisepoxide compounds (B) can also be used.

The molecular weight of the obtained thermoplastic polyoxazolidinone is determined by the molar ratio of the bisepoxide compound (B) relative to diisocyanate compound (A) and optionally relative to the compound (D).

The molar ratio of bisepoxide compound (B) to diisocyanate compound (A) is preferably in the range from 1:2 to 2:1, more preferably in the range from 45:55 to 55:45 and even more preferably in the range 47.8:52.2 to 52.2:47.8.

When the diisocyanate compound (A) is employed in excess, preferably a mono-epoxide is employed as compound (D). When the bisepoxide compound (B) is employed in excess, preferably a mono-isocyanate is employed as compound (D).

*Catalyst (C)*

In an embodiment of the invention the catalyst (C) is at least one compound selected from the group consisting of LiCl, LiBr, LiI, $MgCl_2$, $MgBr_2$, $MgI_2$, $SmI_3$, preferred LiCl and LiBr, and most preferred LiBr.

In one embodiment of the method according to the invention, the catalyst (C) is present in an amount of $\geq 0.001$ to $\leq 5.0$ weight-%, preferably in an amount of $\geq 0.01$ to $\leq 3.0$ weight-%, more preferred $\geq 0.05$ to $\leq 0.40$ weight-%, based on the theoretical yield of thermoplastic polyoxazolidinone.

*Compound (D)*

The compounds comprising a mono-epoxide group and/or a mono-isocyanate group are also denoted as "compound (D)" according to the invention. Compounds comprising a mono-isocyanate and/or a mono-epoxide group are preferred compounds and mono-epoxide groups are most preferred compounds (D) according to the invention.

In an embodiment of the invention the method for the production of the thermoplastic polyoxazolidinone is in the presence of the compound (D), wherein the compound (D) acts as a chain regulator for the thermoplastic polyoxazolidinone and further increases the thermal stability of the thermoplastic polyoxazolidinone.

In a preferred embodiment of the invention the compound (D) is at least one compound is selected from the group consisting of 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefins, cyclohexene oxide, vinylcyclohexene monoxide, limonene monoxide, butadiene monoepoxide and/or N-glycidyl phthalimide and/or n-hexylisocyanate, 4-tert-butylphenyl glycidyl ether, cyclohexyl isocyanate, ω-chlorohexamethylene isocyanate, 2-ethyl hexyl isocyanate, n-octyl isocyanate, dodecyl isocyanate, stearyl isocyanate, methyl isocyanate, ethyl isocyanate, butyl isocyanate, isopropyl isocyanate, octadecyl isocyanate, 6-chloro-hexyl isocyanate, cyclohexyl isocyanate, 2,3,4-trimethylcyclohexyl isocyanate, 3,3,5-trimethylcyclohexyl isocyanate, 2-norbornyl methyl isocyanate, decyl isocyanate, dodecyl isocyanate, tetradecyl isocyanate, hexadecyl isocyanate, octadecyl isocyanate, 3-butoxypropyl isocyanate, 3-(2-ethylhexyloxy)-propyl isocyanate, (trimethylsilyl)isocyanate, phenyl isocyanate, ortho-, meta-, para-tolyl isocyanate, chlorophenyl isocyanate (2,3,4-isomers), dichlorophenyl isocyanate, 4-nitrophenyl isocyanate, 3-trifluoromethylphenyl isocyanate, benzyl isocyanate, dimethylphenylisocyanate (technical mixture and individual isomers), 4-dodecylphenylisocyanat, 4-cyclohexyl-phenyl isocyanate, 4-pentylphenyl isocyanate, 4-tert-butyl phenyl isocyanate, 1-naphthyl isocyanate..

In a preferred embodiment of the invention the compound (D) is selected from the group consisting of 4-tert-butylphenyl glycidyl ether, phenyl glycidyl ether, 4-isopropylphenyl isocyanate, and p-tolyl isocyanate.

In one embodiment of the method according to the invention, the compound (D) is present in an amount of $\geq$ 0.1 to $\leq$ 7.0 weight-%, preferably in an amount of $\geq$ 0.2 to $\leq$ 5.0 weight-%, more preferred $\geq$ 0.5 to $\leq$ 3.0 weight-%, based on the theoretical yield of the thermoplastic polyoxazolidinone (O).

In an embodiment of the invention the calculated mass ratio of the sum of diisocyanate compound (A) the bisepoxide compound (B) and the compound (D) with respect to the sum of diisocyanate compound (A) the bisepoxide compound (B) the compound (D) and the solvent (E) in step ($\alpha$) is from 5 wt-% to 30 wt-%, preferred from 8 wt-% to 26 wt-% and more preferred from 13 wt-% to 24 wt-%. The upper mass ratio of 30 wt-%, preferably 26 wt-% and more preferably 24 wt-% leads to an increased thermal stability of the thermoplastic polyoxazolidinone. The lower mass ratio of 5 wt-%, preferably 8 wt-% and more preferably 13 wt-% leads to less amount of solvent (E) optionally comprising solvent (E-1) that need to be separated and potentially purified. This leads to a more efficient overall process due to energy savings and reduction of solvent amounts.

Solvent (E)

The reaction according to the invention is performed in high boiling non-protic halogenated aromatic solvents, high-boiling non-protic aliphatic heterocyclic solvents, halogenated aromatic or aliphatic heterocyclic solvents.

Suitable solvents (E) are for example organic solvents such as linear or branched alkanes or mixtures of alkanes, toluene, xylene and the isomeric xylene mixtures, mesitylene, mono or polysubstituted halogenated aromatic solvents or halogenated alkane solvents, for example chlorobenzene, dichlorobenzene, dichloromethane, dichloroethane, tetrachloroethane, linear or cyclic ether such as tetrahydrofurane (THF) or methyl-tert-butylether (MTBE), linear or cyclic ester, or polar aprotic solvents such as 1,4-dioxane, acetonitrile, *N,N*-dimethylformamide (DMF), *N,N*-dimethylacetamide (DMAc), dimethylsulfoxide (DMSO), cyclic carbonate, such as ethylencarbonate or propylencarbonate, *N*-methylpyrrolidone (NMP), sulfolane, tetramethylurea, *N,N'*-dimethylethylenurea or mixtures of the above mentioned solvents and/or with other solvents. Preferred solvents (E) are 1,2-dichlorobenzene, sulfolane and *N*-methylpyrrolidone (NMP).

Solvent (E-1)

In an embodiment of the invention the solvent (E) comprises a polar aprotic solvent (E-1). Preferred solvents (E-1) are sulfolane, dimethylsulfoxide, gamma-butyrolactone and and N-methylpyrrolidone (NMP). The presence of the solvent (E-1) effects a better solubility of the alkali halogenides and earth alkali halogenides, and transition metal halogenides such as LiCl, LiBr, LiBr, and $MgCl_2$ as catalyst (C).

Thermoplastic polyoxazolidinone (O)

In an embodiment of the invention the thermoplastic polyoxazolidinone is further reacted with at least one compound (F) to thermoplastic polyoxazolidinone (O), wherein the compound (F) is an alkylene oxide. The addition of the compound (F) leads to a further increase of the thermal stability of the thermoplastic polyoxazolidinone (O).

Compound (F)

In an embodiment of the invention the compound (F) is added in a step-wise manner with two or more individual addition steps or in continuous manner to the thermoplastic polyoxazolidinone formed in step ($\beta$).

In one embodiment of the method according to the invention, the compound (F) is present in an amount of $\geq$ 0.1 to $\leq$ 7.0 weight-%, preferably in an amount of $\geq$ 0.2 to $\leq$ 5.0 weight-%, more preferred $\geq$ 0.5 to $\leq$ 3.0 weight-%, based on the theoretical yield of the thermoplastic polyoxazolidinone (O).

In an embodiment of the invention the compound (F) is a monofunctional alkylene oxide (F-1) and/or polyfunctional alkylene oxide (F-2).

In a preferred embodiment of the invention the compound (D) and compound (F) is the monofunctional alkylene oxide (F-1).

Monofunctional alkylene oxide (F-1)

In an embodiment of the invention wherein the monofunctional alkylene oxide (F-1) is at least one compound selected from the group consisting of phenyl glycidyl ether, o-kresyl glycidyl ether, m-kresyl glycidyl ether, p-kresyl glycidyl ether, 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromphenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefines, cyclohexene oxide, vinylcyclohexene monoxide, limonene monoxide and butadiene monoepoxide *N*-glycidyl phthalimide..

In a more preferred embodiment of the invention the monofunctional alkylene oxide (F-1) is 4-tert-butylphenyl glycidyl ether or phenyl glycidyl ether.

In one embodiment of the method according to the invention, the compound (F-1) is present in an amount of $\geq 0.1$ to $\leq 7.0$ weight-%, preferably in an amount of $\geq 0.2$ to $\leq 5.0$ weight-%, more preferred $\geq 0.5$ to $\leq 3.0$ weight-%, based on the theoretical yield of the thermoplastic polyoxazolidinone (O).

Polyfunctional alkylene oxide (F-2)

In an embodiment of the invention the polyfunctional alkylene oxide (F-2) is at least one compound selected from the group consisting of resorcinol diglycidyl ether, neopentyl glycol diglycidyl ether, 1,6-hexanediol diglycidyl ether, 1,4-butanediol diglycidyl ether, hydrogenated bisphenol-A diglycidyl ether, bisphenol-A diglycidyl ether, bisphenol-F diglycidyl ether, bisphenol-S diglycidyl ether, 9,9-bis(4-glycidyloxy phenyl)fluorine, tetrabromo bisphenol-A diglycidyl ether, tetrachloro bisphenol-A diglycidyl ether, tetramethyl bisphenol-A diglycidyl ether, tetramethyl bisphenol-F diglycidyl ether, tetramethyl bisphenol-S diglycidyl ether, diglycidyl terephthalate, diglycidyl o-phthalate, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, butadiene diepoxide, vinylcyclohexene diepoxide, limonene diepoxide, the diepoxides of double unsaturated fatty acid C1 - C18 alkyl esters, 2-dihydroxybenzene diglycidyl ether, 1,4-dihydroxybenzene diglycidyl ether, 4,4'-(3,3,5-trimethylcyclohexyliden)bisphenyl diglycidyl ether, diglycidyl isophthalate.

More preferred the polyfunctional alkylene oxide (F-2) is selected from the group consisting of resorcinol diglycidyl ether, bisphenol A diglycidyl ether, and bisphenol F diglycidyl ether.

Most preferred the polyfunctional alkylene oxide (F-2) is selected from the group consisting of bisphenol A diglycidyl ether, and bisphenol F diglycidyl ether.

In one embodiment of the method according to the invention, the compound (F-2) is present in an amount of $\geq 0.1$ to $\leq 20.0$ weight-%, preferably in an amount of $\geq 0.2$ to $\leq 17.0$ weight-%, more preferred $\geq 0.5$ to $\leq 15.0$ weight-%, based on the theoretical yield of the thermoplastic polyoxazolidinone (O).

*Product-by-process claim*

Another aspect of the present invention is a thermoplastic polyoxazolidinone (O), obtainable by a method according to the invention.

In an embodiment of the invention the theoretical number average molecular weights Mn of the thermoplastic polyoxazolidinone (O) is preferentially $\geq 500$ to $\leq 500'000$ g/mol, more preferred $\geq 1'000$ to $\leq 50'000$ g/mol and even more preferred $\geq 5'000$ to $\leq 25'0000$ g/mol as determined with gel permeation chromatography (GPC).

Preferably, the molar amount of mono-epoxide and mono-isocyanate compound added as compound (C) fulfils certain criteria with respect to the molar amount of bisepoxide compound (B) and diisocyanate compound (A). The ratio r is defined as the absolute value of the molar amount of compound (C) ($n_c$) to the difference between the molar amount of bisepoxide compound (B) ($n_{bisepoxide}$) and the molar amount of diisocyanate compound (A) ($n_{diisocyanate}$) according to the following formula (1)

$$r = \left| n_C / (n_{bisepoxide} - n_{diisocyanate}) \right| \qquad (1)$$

is preferably in the range of $\geq 1.5$ to $\leq 2.5$, more preferably in the range of $\geq 1.9$ to $\leq 2.1$, and particularly preferred in the range of $\geq 1.95$ to $\leq 2.05$. Without being bound to a theory, all epoxide groups and all isocyanate groups will have reacted at the end of the reaction, when such an amount of chain regulator is being used.

As an alternative, an excess of a mono-epoxide and/or a mono-isocyanate compound is added as chain regulator to the reaction mixture after the reaction between bisepoxide and diisocyanate has been completed. Without being bound to a theory, the terminal epoxide groups or the terminal isocyanate groups resulting from the reaction of the bisepoxide and the diisocyanate will be converted to inert end groups by reaction with the regulator. The excess amount of regulator is subsequently removed from the product, e.g., by extraction, precipitation, distillation, stripping or thin film evaporation.

In an embodiment of the method according to the invention the method further comprises the step of isolating the thermoplastic polyoxazolidinone obtained by the reaction, heating the thermoplastic polyoxazolidinone and pressing the thermoplastic polyoxazolidinone into a desired shape.

The present invention further relates to a spun fiber, comprising a thermoplastic polyoxazolidinone according to the invention and a textile, comprising such a spun fiber.

The method according to the invention is suited for the synthesis of oxazolidinones with interesting properties for use, for example, as pharmaceutics or antimicrobiotics.

Thermoplastic polyoxazolidinones obtained by the method according to the invention are particularly suited as polymer building blocks in polyurethane chemistry. For example, epoxy-terminated oligomeric oxazolidinones (oligooxazolidinones) may be reacted with polyols or polyamines to form foams or thermosets. Such epoxy-terminated oligomeric oxazolidinones are also suited for the preparation of composite materials. Epoxy-terminated oligomeric oxazolidinones (oligooxazolidinones) may also be reacted with their NCO-terminated counterparts to form high molecular weight thermoplastic polyoxazolidinones, which are useful as transparent, high temperature-stable materials. Thermoplastic polyoxazolidinones with high molecular weight obtained by the method according to the invention are particularly suited as transparent, high temperature-stable thermoplastic materials.

The conventional additives for these thermoplastics, such as fillers, UV stabilizers, heat stabilizers, antistatics and pigments, can also be added in the conventional amounts to the thermoplastic polyoxazolidinones according to the invention; the mould release properties, the flow properties and/or the flame resistance can optionally also be improved by addition of external mould release agents, flow agents and/or flameproofing agents (e.g. alkyl and aryl phosphites and phosphates, alkyl- and arylphosphanes and low molecular weight carboxylic acid alkyl and aryl esters, halogen compounds, salts, chalk, quartz flour, glass fibres and carbon fibres, pigments and a combination thereof. Such compounds are described e.g. in WO 99/55772, p. 15 - 25, and in the corresponding chapters of the "Plastics Additives Handbook", ed. Hans Zweifel, 5th edition 2000, Hanser Publishers, Munich).

The thermoplastic polyoxazolidinones obtained according to the current invention have excellent properties regarding stiffness, hardness and chemical resistance.

They are also useful in polymer blends with other polymers such as polystyrene, high-impact polystyrene (polystyrene modified by rubber for toughening, usually polybutadiene), copolymers of styrene such as styrene-acrylonitrile copolymer (SAN), copolymers of styrene, alpha-methylstyrene and acrylonitrile, styrene - methyl methacrylate copolymers, styrene - maleic anhydride copolymers, styrene - maleimide copolymers, styrene - acrylic acid copolymers, SAN modified by grafting rubbers for toughening such as ABS (acrylonitrile-butadiene-styrene polymer), ASA (acrylonitrile-styrene-acrylate), AES (acrylonirile-EPDM-styrene), ACS (acrylonitrile-chlorinated polyethylene-stryrene) polymers, copolymers of styrene, alpha-methylstyrene and acrylonitrile modified with rubbers such as polybutadiene or EPDM, MBS/MABS (methyl methacrylate - styrene modified with rubber such as polybutadiene or EPDM), aromatic polyesters such as polyethylene terephthalate (PET), polybutylene terephthalate (PBT), polytrimethylene terephthalate (PTT), aliphatic polyamides such as PA6, PA6,6, PA4,6, PA 11 or PA 12, polylactic acid, aromatic polycarbonates such as the polycarbonate of bisphenol A, co-polycarbonates such as co-polycarbonates of bisphenol A and bisphenol TMC, polymethylmethacrylate (PMMA), polyvinylchloride, polymethyleneoxide (POM), polyphenylene ether, polyphenylene sulphide (PPS), polysulfones, polyetherimide (PEI), polyethylene, polypropylene.

They are also useful for blends in combination with the above polymers or others, for example blends of polycarbonate and ABS, polycarbonate and PET, polycarbonate and PBT, polycarbonate and ABS and PBT or polycarbonate and ABS and PBT.

The properties of the thermoplastic polyoxazolidinones according to this invention or blends with the abovementioned polymers or others can also be modified by fillers such as glass fibers, hollow or solid glass spheres, silica (for example fumed or precipitated silica), talcum, calcium carbonate, titanium dioxide, carbon fibers, carbon black, natural fibers such as straw, flax, cotton or wood fibers.

Thermoplastic polyoxazolidinones can be mixed with any usual plastics additive such as antioxidants, light stabilizers, impact modifiers, acid scavengers, lubricants, processing aids, antiblocking additives, slip additives, antifogging additives, antistatic additives, antimicrobials, chemical blowing agents, colorants, optical brighteners, fillers and reinforcements as well as flame retardant additives.

Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

A specific type of impact modifier is an elastomer-modified graft copolymer comprising (i) an elastomeric (i.e., rubbery) polymer substrate having a Tg less than 10°C, more specifically less than -10°C, or more specifically -40° to -80°C, and (ii) a rigid polymeric shell grafted to the elastomeric polymer substrate. Materials suitable for use as the elastomeric phase include, for example, conjugated diene rubbers, for example polybutadiene and polyisoprene; copolymers of a conjugated diene with less than 50 wt% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C1-8 alkyl (meth)acrylates; elastomeric copolymers of C1-8 alkyl (meth)acrylates with butadiene and/or styrene; or combinations comprising at least one of the foregoing elastomers. materials suitable for use as the rigid phase include, for example, monovinyl aromatic monomers such as styrene and alpha-methyl styrene, and monovinylic monomers such as acrylonitrile, acrylic acid, methacrylic acid, and the C1-C6 esters of acrylic acid and methacrylic acid, specifically methyl methacrylate. Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

Impact modifiers are generally present in amounts of 1 to 30 wt%, specifically 3 to 20 wt%, based on the total weight of the polymers in the flame retardant composition. An exemplary impact modifier comprises an acrylic polymer in an amount of 2 to 15 wt%, specifically 3 to 12 wt%, based on the total weight of the flame retardant composition.

The composition may also comprise mineral fillers. In an embodiment, the mineral fillers serve as synergists. The synergist facilitates an improvement in the flame retardant properties when added to the flame retardant composition over a comparative thermoplastic polyoxazolidinone composition that contains all of the same ingredients in the same quantities except for the synergist. Examples of mineral fillers are mica, talc, calcium carbonate, dolomite, wollastonite, barium sulfate, silica, kaolin, feldspar, barytes, or the like, or a combination comprising at least one of the foregoing mineral fillers. The mineral filler may have an average particle size of 0.1 to 20 micrometers, specifically 0.5 to 10 micrometers, and more specifically 1 to 3 micrometers. An exemplary mineral filler it talc having an average particle size of 1 to 3 micrometers..

The mineral filler is present in amounts of 0.1 to 20 wt%, specifically 0.5 to 15 wt%, and more specifically 1 to 5 wt%, based on the total weight of the flame retardant composition.

The thermoplastic polyoxazolidinones can also be colored with a whole range of soluble organic dyes and with pigment dyes, which can be either organic or inorganic.

Further possible uses of the thermoplastic polyoxazolidinones according to the invention are:

01. Housing for electrical appliances (e.g. household appliances, computers, mobile phones, display screens, television,...), including transparent or translucent housing parts like lamp covers.
02. Light guide panels and BLUs
03. Optical Data Storage (CD, DVD, Blu-ray Discs)
04. electrically insulating materials for electrical conductors, for plug housings and plug connectors, carrier material for organic photoconductors, Chip boxes and chip supports, fuse encapsulation
05. Static dissipative / electrically conductive formulations for use in explosion protection applications and others with respective requirements
06. Optics, diffusers, reflectors, light guides as well as housings for LED and conventional Lighting, e.g. streetlights, industrial lamps, searchlights, traffic lights,...
07. Thermally conductive formulations for thermal management applications like heatsinks.
08. Applications for Automotive and other Transportation vehicles (cars, buses, trucks, railway, aircrafts, ships) as Glazing, also safety glazing, lighting (e.g. headlamp lenses, tail lights, turn signals, back-up lights, fog lights; bezels and reflectors), sun and panoramic roofs, cockpit canopies, cladding of railway or other cabins, Windscreens, interiors and exteriors parts (e.g. instrument covers, consoles, dashboards, mirror housings, radiator grilles, bumpers, spoilers),
09. EVSE and batteries
10. Metal substitution in gears, seals, supporting rings
11. Roof structures (e.g. for sports arenas, stations, conservatories, greenhouses)
12. windows (including theft-proof windows and projectile-resistant windows, teller's windows, barriers in banks),
13. partition walls
14. solar panels
15. Medical devices (components of blood pumps, auto-injectors and mobile medical-injection pumps, IV access devices, renal therapy and inhalation devices (such as nebulizers, inhalers) sterilisable surgical instruments, medical implants, oxygenators, dialyzers, ...)

16. Foodcontact applications (tableware, dinnerware, glasses, tumblers, food containers, institutional food trays, water bottles, water filter systems)

17. sports articles, such as e.g. slalom poles or ski boot buckles.

18. household articles, such as e.g. kitchen sinks and letterbox housings.

19. safety applications (glasses, visors or optical corrective glasses, helmets, visors, riot gear (helmets and shields), safety panes)

20. Sunglasses, swimming goggles, SCUBA masks

21. Signs, displays, poster protection

22. Lightweight luggage

23. water fitting, pump impellors, thin hollow fibres for water treatment

24. Industrial pumps, valves and seals, connectors

25. Membranes

26. Gas separation

27. Coating applications (e.g. Anticorrosion paint, powder coating)

Examples

The present invention will be further described with reference to the following examples.

*Diisocyanate compound (A)*

A-2: 2,4-Toluenediisoyanate >99% (TDI) 2,4-Isomer, Covestro AG, Germany

*Epoxide compound (B)*

| B-1 ISDGE | 1,4:3,6-Dianhydro-2,5-bis-O-(2,3-epoxypropyl)-D-Glucitol, difunctional epoxide (purity 97%) was synthesized in a 2-step procedure in accordance to the literature (J. Lukaszczyk, B. Janicki, A. Lopez, K. Skolucka, H. Wojdyla, C. Persson, S. Piaskowski, M. Smiga-Matuszowicz "Novel injectable biomaterials for bone augmentation based on isosorbide dimethacrylic monomers"). Isosorbide (TCI Germany; purity >98%) was treated with allyl bromide and an aqueous KOH solution to generate diallyl isosorbide. Purification was achieved by using vacuum distillation. The purified compound was then treated with OXONE® to yield the corresponding diepoxide. |
|---|---|
| B-2 BADGE | 2-[[4-[2-[4-(Oxiran-2-ylmethoxy)phenyl]propan-2-yl]phenoxy] methyl] oxirane (Bisphenol A diglycidyl ether), difunctional epoxide, Epikote 162 (Hexion, 98%) was used as obtained without further purification. |
| *Catalyst (C)* C-1: LiBr | Lithium bromide, purity >99,9%, was obtained from Sigma Aldrich |
| C-2: Ph$_4$PBr | Tetraphenyl phosphonium bromide, >97%, was obtained by Sigma Aldrich |

*Solvents (E)*

*Ortho*-dichlorobenzene (o-DCB), purity 99%, anhydrous, was obtained from Sigma-Aldrich, Germany
*N*-Methylpyrrolidone (NMP), purity 99.5%, anhydrous, was obtained from Sigma-Aldrich, Germany

*Sulphur containing solvent (E-1)*

Sulfolane, purity ≥99%, anhydrous, was obtained from Sigma-Aldrich, Germany

*Compound (D) and (F)*

BPGE    *para-tert*-butylphenylglycidylether (92%, Denacol EX-146, Nagase Chem Tex Corporation, Japan), was distilled before use (>99%)

TDI, NMP, LiBr, and BPGE were used as received without further purification. BADGE (Epikote 162) and sulfolane were used after melting at 50°C and drying over molecular sieve. o-DCB was dried over molecular sieve prior to use.

Addition protocol 1: Solution of diisocyanate compound (A) is added to a solution of bisepoxide compound (B) and the catalyst (C) in a semi-batch process, the compound (D) is added in a second step according to example 14 of EP 16703330.7.

Addition protocol 2: The diisocyanate compound (A), the bisepoxide compound (B) and the compound (D) is added to a flask containing the catalyst (C) dissolved in the solvent (E) comprising the solvent (E-1) according to claim 1 of the present application.

*Characterisation of polyoxazolidinone*

IR

Solid state IR analyses were performed on a Bruker ALPHA-P IR spectrometer equipped with a diamond probe head. The software OPUS 6.5 was used for data treatment. A background spectrum was recorded against ambient air. Thereafter, a small sample of the polyoxazolidinone (2 mg) was applied to the diamond probe and the IR spectrum recorded averaging over 24 spectra obtained in the range of 4000 to 400 $cm^{-1}$ with a resolution of 4 $cm^{-1}$.

NMR

For $^1$H NMR analysis, a sample of the oligomer (20 mg) was dissolved in deuterated dimethyl sulfoxide (0,5 mL) and measured on a Bruker spectrometer (AV400, 400 MHz).

Molecular Weight

The average chain length of the thermoplastic polyoxazolidinones was controlled by the molar ratio of bisepoxide (B), diisocyanate (A) and/or compound (D).

The formula below gives a general mathematical formula to calculate the average chain length n in the polymeric product obtained with a diisocyanate (A) and a bisepoxide (B):

$$n = (1 + q) / (1 + q - 2pq) \qquad\qquad (2)$$

with $q = n_x / n_y \leq 1$ and x,y = bisepoxide (B) or diisocyanate (A) and with the conversion p
whereby $n_x$ and $n_y$ are the molar amounts of bisepoxide or diisocyanate, respectively.

DSC

The glass transition point $T_g$ was recorded on a Mettler Toledo DSC 1. The sample (4 to 10 mg) was heated from 30 °C to 250 °C at a heating rate of 10 K/min then cooled down to 30 °C at a rate of 10 K/min. This heating cycle was repeated three times. For data analysis the software STAR$^e$ SW 11.00 was used. For determination of the glass transition temperature a tangential analysis method was used. The glass transition temperature $T_g$ was recorded on a Mettler Toledo DSC 1. The sample (4 to 10 mg) was heated from 30 °C to 250 °C at a heating rate of 10 K/min then cooled down to 30 °C at a rate of 10 K/min. This heating cycle was repeated three times. For data analysis the software STAR$^e$ SW 11.00 was used. For determination of the glass transition temperature the inflect point was used and taken from the third heating cycle.

TGA

The stability of the thermoplastic polyoxazolidinones was characterized by thermogravimetric analysis (TGA). The measurements were performed on a Mettler Toledo TGA/DSC 1. For data analysis the software STAR$^e$ SW 11.00 was used. The sample (6 to 20 mg) was weighed in a 70 μL Alox pan (previously cleaned at 1000 °C for 7 hrs), heated from 25 °C to 600 °C with a heating rate of 10 K/min under argon flow (15 mL/min) and the relative weight loss was followed in dependence of temperature. For data analysis the software STAR$^e$ SW 11.00 was used. The decomposition temperature ($T_d$) stated is the onset point determined from the step tangent of the sinusoidal weight loss curve. To study the thermal stability over time, the thermoplastic polyoxazolidinones samples (6 to 20 mg) were weighed in a 150 μL Alox pan (previously cleaned at 1000 °C for 7hrs), heated from 25 °C to the target temperature (240 °C, 260 °C and 280 °C, respectively) with a heating rate of 10 K/min under argon flow (15 mL/min) followed by an isothermal heating for 1 h at the corresponding target temperature. The relative weight loss was followed in dependence of time. The $\Delta wt\%^T$ given in the examples is the weight loss percentage of the sample after 1h at the target temperature T.

GPC

The determination of the number average molecular weights, weight average molecular weights and the polydispersity index were carried out by gel permeation chromatography (GPC). GPC was performed on an Agilent 1100 Series instrument with DMAc + LiBr (1.7 g·L$^{-1}$) as the eluent, PSS GRAM analytical columns (1 × 100 Å, 2 × 3000 Å) from PSS, equipped with a refractive index (RI) detector. The column flow rate in all measurements was set to 0.675 mL·min$^{-1}$. For determining molecular weights, the calibration was performed with poly(styrene) standards (ReadyCal-Kit PS - Mp 370-2520000Da from PSS). The samples were analysed using PSS WinGPC UniChrom V 8.2 Software.

Example 1: *Polymerization of TDI as compound (A) and ISDGE as compound (B) using LiBr as compound (C) and BPGE as compound (D) with addition protocol 2 and sulfolane as solvent (E-1)*

A Schlenk flask was charged with lithium bromide (0,01 g, 0,12 mmol). Then sulfolane (0,94 mL) and o-DCB (2,50 mL) was added. The Schlenk flask was closed and inertised with argon. The mixture was stirred (400 rpm) and heated to 175 °C. After 10 min at this temperature, a solution of TDI (1,0 g, 5,74 mmol), ISDGE (1,51 g, 5,63 mmol) and BPGE (0,05 g, 0,23 mmol) in o-DCB (2.82 mL) was added at a rate of 1 mL/min. After 60 min at this temperature additional o-DCB (2,0 mL) was added and stirred for 30 min. Subsequently 10 mL of *N*-methyl pyrrolidone was added to the reaction mixture, stirred for 10 min and then allowed to cool to room temperature.
The completion of the reaction was confirmed by the absence of the isocyanate band (2260 cm$^{-1}$) in the IR spectrum from the reaction mixture.The thermoplastic polyoxazolidinone was precipitated in methanol, milled with an ultraturrax dispersing instrument and collected by filtration. The thermoplastic polyoxazolidinone was washed with MeOH three times and filtered. The thermoplastic polyoxazolidinone was then dried under vacuum at 140 °C for 8 h and analysed.
In the solid state IR spectrum the characteristic signal for the oxazolidinone carbonyl group was observed at 1742 cm$^{-1}$.
In the solid state IR spectrum the characteristic signal for isocyanurate groups at 1710 cm$^{-1}$ was not observed.
In the $^1$H NMR spectrum, the characteristic methine and methylene signals assigned to the oxazolidinone moieties were observed.
Thermogravimetric analysis of the product showed a mass loss of 0,6 wt% after tempering at 240 °C for 1 h and a mass loss of 0,8 wt% after tempering at 260 °C for 1 h.

Example 2: *Polymerization of TDI as compound (A) and ISDGE as compound (B) using LiBr as compound (C) with BPGE as compound (D) and addition of a compound (F) added in a second step with addition protocol 2 and sulfolane as solvent (E-1)*

A Schlenk flask was charged with LiBr (0,01 g, 0,12 mmol). Then sulfolane (0,94 mL) and o-DCB (2,50 mL) was added. The Schlenk flask was closed and inertised with argon. The mixture was stirred (400 rpm) and heated to 175 °C. After 10 min at this temperature, a solution of TDI (1,0 g, 5,74 mmol), ISDGE (1,51 g, 5,63 mmol) and BPGE (0,05 g, 0,23 mmol) in o-DCB (2.82 mL) was added at a rate of 1 mL/min. After 60 min, para-tert-butylphenyl glycidyl ether (0,24 g, 1,15 mmol), dissolved in ortho-dichlorobenzene (2,0 mL), was added to the reaction solution. After the addition, the reaction was stirred at 175 °C for another 30 min. Subsequently 10 mL of *N*-methylpyrrolidone was added to the reaction mixture, stirred for 10min and then allowed to cool to room temperature.
The completion of the reaction was confirmed by the absence of the isocyanate band (2260 cm$^{-1}$) in the IR spectrum from the reaction mixture.
The thermoplastic polyoxazolidinone was precipitated in methanol, milled with an ultraturrax dispersing instrument and collected by filtration. The thermoplastic polyoxazolidinone was washed with MeOH three times and filtered. The thermoplastic polyoxazolidinone was then dried under vacuum at 140 °C for 8 h and analysed.
In the solid state IR spectrum the characteristic signal for the oxazolidinone carbonyl group was observed at 1740 cm$^{-1}$.
In the solid state IR spectrum the characteristic signal for isocyanurate groups was not observed.
In the $^1$H NMR spectrum, the characteristic methine and methylene signals assigned to the oxazolidinone moieties were observed.

Thermogravimetric analysis of the product showed a mass loss of 0,4 wt% after tempering at 240 °C for 1 h and a mass loss of 0,5 wt% after tempering at 260 °C for 1 h.

Example 3: *Polymerization of TDI as compound (A) and ISDGE as compound (B) with LiBr as compound (C) using BPGE as (D) with addition protocol 1 and sulfolane as solvent (E-1)*

A Schlenk flask was charged with LiBr (0,01 g, 0,12 mmol), ISDGE (1,51 g, 5,63 mmol) and BPGE (0,05 g, 0,23 mmol). Then sulfolane (0,63 mL) and o-DCB (1,56 mL) were added. The Schlenk flask was closed and inertised with argon. The mixture was stirred (400 rpm) and heated to 175 °C. After 10 min at this temperature, a solution of TDI (1,0 g, 5,74 mmol) in o-DCB (3,12 mL) was added at a rate of 1 mL/min. After 30 min, the stirring stopped due to gelification in the Schlenk flask.

Analysis of the reaction mixture by IR spectroscopy showed uncomplete conversion of the isocyanate groups ($2260$ cm$^{-1}$).

The thermoplastic polyoxazolidinone was precipitated in methanol, milled with an ultraturrax dispersing instrument and collected by filtration. The thermoplastic polyoxazolidinone was washed with MeOH three times and filtered. The thermoplastic polyoxazolidinone was then dried under vacuum at 140 °C for 8 h and analysed.

In the solid state IR spectrum the characteristic signal for the oxazolidinone carbonyl group was observed at $1740$ cm$^{-1}$.

In the solid state IR spectrum the characteristic signal for isocyanurate groups at $1710$ cm$^{-1}$ was observed.

In the $^1$H NMR spectrum, the characteristic methine and methylene signals assigned to the oxazolidinone moieties were observed.

Example 4: *Polymerization of TDI as compound (A) and ISDGE as compound (B) with Ph$_4$PBr as compound (C) using BPGE as (D) with addition protocol 2 and sulfolane as solvent (E-1)*

A Schlenk flask was charged with tetraphenyl phosphonium bromide (0,05 g, 0,12 mmol). Then sulfolane (0,94 mL) and o-DCB (2,50 mL) was added. The Schlenk flask was closed and inertised with argon. The mixture was stirred (400 rpm) and heated to 175 °C. After 10 min at this temperature, a solution of TDI (1,0 g, 5,74 mmol), ISDGE (1,51 g, 5,63 mmol) and BPGE (0,05 g, 0,23 mmol) in o-DCB (2,82 mL) was added at a rate of 1 mL/min. After 60 min at this temperature additional o-DCB (2,0 mL) was added and stirred for 30 min. Subsequently 10 mL of *N*-methyl pyrrolidone was added to the reaction mixture, stirred for 10min and then allowed to cool to room temperature.

The completion of the reaction was confirmed by the absence of the isocyanate band ($2260$ cm$^{-1}$) in the IR spectrum from the reaction mixture.The thermoplastic polyoxazolidinone was precipitated in methanol, milled with an ultraturrax dispersing instrument and collected by filtration. The thermoplastic polyoxazolidinone was washed with MeOH three times and filtered. The thermoplastic polyoxazolidinone was then dried under vacuum at 140 °C for 8 h and analysed.

In the solid state IR spectrum the characteristic signal for the oxazolidinone carbonyl group was observed at $1742$ cm$^{-1}$.

In the solid state IR spectrum the characteristic signal for isocyanurate groups at $1710$ cm$^{-1}$ was observed.

In the $^1$H NMR spectrum, the characteristic methine and methylene signals assigned to the oxazolidinone moieties were observed.

Thermogravimetric analysis of the product showed a mass loss of 0,8 wt% after tempering at 240 °C for 1 h and a mass loss of 1,1 wt% after tempering at 260 °C for 1 h.

Example 5: *Polymerization of TDI as compound (A) and ISDGE as compound (B) using LiBr as compound (C) with addition protocol 2 and sulfolane as solvent (E-1)*

A Schlenk flask was charged with lithium bromide (0,01 g, 0,12 mmol). Then sulfolane (0,94 mL) and o-DCB (2,50 mL) was added. The Schlenk flask was closed and inertised with argon. The mixture was stirred (400 rpm) and heated to 175 °C. After 10 min at this temperature, a solution of TDI (1,0 g, 5,74 mmol) and ISDGE (1,51 g, 5,63 mmol) in o-DCB (2,82 mL) was added at a rate of 1 mL/min. After 60 min at this temperature additional o-DCB (2,0 mL) was added and stirred for 30 min. Subsequently 10 mL of *N*-methyl pyrrolidone was added to the reaction mixture, stirred for 10 min and then allowed to cool to room temperature.

The completion of the reaction was confirmed by the absence of the isocyanate band ($2260$ cm$^{-1}$) in the IR spectrum from the reaction mixture.The thermoplastic polyoxazolidinone was precipitated in methanol, milled with an ultraturrax dispersing instrument and collected by filtration. The thermoplastic polyoxazolidinone was washed with MeOH three times and filtered. The thermoplastic polyoxazolidinone was then dried under vacuum at 140 °C for 8 h and analysed.

In the solid state IR spectrum the characteristic signal for the oxazolidinone carbonyl group was observed at $1742$ cm$^{-1}$.

In the solid state IR spectrum the characteristic signal for isocyanurate groups at 1710 cm$^{-1}$ was not observed.

In the $^1$H NMR spectrum, the characteristic methine and methylene signals assigned to the oxazolidinone moieties were observed.

Thermogravimetric analysis of the product showed a mass loss of 0,8 wt% after tempering at 240 °C for 1 h and a mass loss of 1,1 wt% after tempering at 260 °C for 1 h.

Example 6: *Polymerization of TDI as compound (A) ISDGE and BADGE as compound (B) with LiBr as compound (C) using BPGE as compound (D) and addition of a compound (F) added in a second step with addition protocol 2 and sulfolane as solvent (E-1)*

A Schlenk flask was charged with lithium bromide (0,01 g, 0,12 mmol). Then sulfolane (0,94 mL) and o-DCB (2,50 mL) was added. The Schlenk flask was closed and inertised with argon. The mixture was stirred (400 rpm) and heated to 175 °C. After 10 min at this temperature, a solution of TDI (1,0 g, 5,74 mmol), ISDGE (0,75 g, 2,81 mmol), BADGE (0,96 g, 2,81 mmol) and BPGE (0,05 g, 0,23 mmol) in o-DCB (2,82 mL) was added at a rate of 1 mL/min. After 60 min, para-tert-butylphenyl glycidyl ether (0,24 g, 1,15 mmol), dissolved in o-DCB (2,0 mL), was added to the reaction solution and stirred for 30 min. Subsequently 10 mL of *N*-methyl pyrrolidone was added to the reaction mixture, stirred for 10min and then allowed to cool to room temperature.

The completion of the reaction was confirmed by the absence of the isocyanate band (2260 cm$^{-1}$) in the IR spectrum from the reaction mixture.The thermoplastic polyoxazolidinone was precipitated in methanol, milled with an ultraturrax dispersing instrument and collected by filtration. The thermoplastic polyoxazolidinone was washed with MeOH three times and filtered. The thermoplastic polyoxazolidinone was then dried under vacuum at 140 °C for 8 h and analysed.

In the solid state IR spectrum the characteristic signal for the oxazolidinone carbonyl group was observed at 1747 cm$^{-1}$.

In the solid state IR spectrum the characteristic signal for isocyanurate groups at 1710 cm$^{-1}$ was not observed.

In the $^1$H NMR spectrum, the characteristic methine and methylene signals assigned to the oxazolidinone moieties were observed.

Thermogravimetric analysis of the product showed a mass loss of 0,2 wt% after tempering at 240 °C for 1 h and a mass loss of 0,3 wt% after tempering at 260 °C for 1 h.

Example 7: *Polymerization of TDI as compound (A) ISDGE and BADGE as compound (B) with LiBr as compound (C) using BPGE as compound (D) and addition of a compound (F) added in a second step with addition protocol 2 and sulfolane as solvent (E-1)*

A Schlenk flask was charged with lithium bromide (0,01 g, 0,12 mmol). Then sulfolane (0,94 mL) and o-DCB (2,50 mL) was added. The Schlenk flask was closed and inertised with argon. The mixture was stirred (400 rpm) and heated to 175 °C. After 10 min at this temperature, a solution of TDI (1,0 g, 5,74 mmol), ISDGE (0,30 g, 1,13 mmol), BADGE (1,53 g, 4,52 mmol) and BPGE (0,05 g, 0,23 mmol) in o-DCB (2,82 mL) was added at a rate of 1 mL/min. After 60 min, para-tert-butylphenyl glycidyl ether (0,24 g, 1,15 mmol), dissolved in o-DCB (2,0 mL), was added to the reaction solution and stirred for 30 min. Subsequently 10 mL of *N*-methyl pyrrolidone was added to the reaction mixture, stirred for 10 min and then allowed to cool to room temperature.

The completion of the reaction was confirmed by the absence of the isocyanate band (2260 cm$^{-1}$) in the IR spectrum from the reaction mixture.The thermoplastic polyoxazolidinone was precipitated in methanol, milled with an ultraturrax dispersing instrument and collected by filtration. The thermoplastic polyoxazolidinone was washed with MeOH three times and filtered. The thermoplastic polyoxazolidinone was then dried under vacuum at 140 °C for 8 h and analysed.

In the solid state IR spectrum the characteristic signal for the oxazolidinone carbonyl group was observed at 1748 cm$^{-1}$.

In the solid state IR spectrum the characteristic signal for isocyanurate groups at 1710 cm$^{-1}$ was not observed.

In the $^1$H NMR spectrum, the characteristic methine and methylene signals assigned to the oxazolidinone moieties were observed.

Thermogravimetric analysis of the product showed a mass loss of 0,2 wt% after tempering at 240 °C for 1 h and a mass loss of 0,3 wt% after tempering at 260 °C for 1 h.

Example 8: *Polymerization of TDI as compound (A) ISDGE and BADGE as compound (B) with LiBr as compound (C) using BPGE as compound (D) and addition of a compound (F) added in a second step with addition protocol 2 and sulfolane as solvent (E-1)*

A Schlenk flask was charged with lithium bromide (0,01 g, 0,12 mmol). Then sulfolane (0,94 mL) and o-DCB (2,50 mL) was added. The Schlenk flask was closed and inertised with argon. The mixture was stirred (400 rpm) and heated to 175 °C. After 10 min at this temperature, a solution of TDI (1,0 g, 5,74 mmol), ISDGE (0,15 g, 0,56 mmol), BADGE (1,72 g, 5,06 mmol) and BPGE (0,05 g, 0,23 mmol) in o-DCB (2,82 mL) was added at a rate of 1 mL/min. After 60 min, para-tert-butylphenyl glycidyl ether (0,24 g, 1,15 mmol), dissolved in o-DCB (2,0 mL), was added to the reaction solution and stirred for 30 min. Subsequently 10 mL of *N*-methyl pyrrolidone was added to the reaction mixture, stirred for 10 min and then allowed to cool to room temperature.

The completion of the reaction was confirmed by the absence of the isocyanate band (2260 cm$^{-1}$) in the IR spectrum from the reaction mixture. The thermoplastic polyoxazolidinone was precipitated in methanol, milled with an ultraturrax dispersing instrument and collected by filtration. The thermoplastic polyoxazolidinone was washed with MeOH three times and filtered. The thermoplastic polyoxazolidinone was then dried under vacuum at 140 °C for 8 h and analysed.

In the solid state IR spectrum the characteristic signal for the oxazolidinone carbonyl group was observed at 1749 cm$^{-1}$.

In the solid state IR spectrum the characteristic signal for isocyanurate groups at 1710 cm$^{-1}$ was not observed.

In the $^1$H NMR spectrum, the characteristic methine and methylene signals assigned to the oxazolidinone moieties were observed.

Thermogravimetric analysis of the product showed a mass loss of 0,2 wt% after tempering at 240 °C for 1 h and a mass loss of 0,2 wt% after tempering at 260 °C for 1 h.

Table 1: Comparison of the results of Examples 1 to 8.

| Example | Compound (A) | Compound (B) | n(ISDGE)/ (n (ISDGE)+ n (BADGE) [mol-%] | Compound (C) | Compound (D) | Compound (F) | Addition Protocol | X(A) | $T_G$ [°C] | $T_D$ [°C] | $\Delta wt$ %240 | $\Delta wt$ %260 | $\Delta wt$ %280 |
|---|---|---|---|---|---|---|---|---|---|---|---|---|---|
| 1 | TDI | ISDGE | 100 | LiBr | BPGE | - | 2 | Complete | 161,1 | 400,7 | -0,6 | -0,8 | -1,3 |
| 2 | TDI | ISDGE | 100 | LiBr | BPGE | BPGE | 2 | Complete | 162,3 | 394,4 | -0,4 | -0,5 | -0,7 |
| 3 (comp.) | TDI | ISDGE | 100 | LiBr | BPGE | - | 1 | Incomplete | n.d. | 364,2 | n.d. | n.d. | n.d. |
| 4 (comp.) | TDI | ISDGE | 100 | $Ph_4PBr$ | BPGE | - | 2 | Complete | 166,6 | 398,8 | -0,8 | -1,1 | -1,7 |
| 5 (comp.) | TDI | ISDGE | 100 | LiBr | - | - | 2 | Complete | 164,4 | 397,9 | -0,8 | -1,1 | -1,6 |
| 6 | TDI | ISDGE/ BADGE | 50 | LiBr | BPGE | BPGE | 2 | Complete | 174,1 | 399,0 | -0,2 | -0,3 | -0,6 |
| 7 | TDI | ISDGE/ BADGE | 20 | LiBr | BPGE | BPGE | 2 | Complete | 180,4 | 392,5 | -0,2 | -0,3 | -0,6 |
| 8 | TDI | ISDGE/ BADGE | 10 | LiBr | BPGE | BPGE | 2 | Complete | 183,6 | 402,1 | -0,2 | -0,2 | -0,5 |

comp.: comparative example, n.s.: not soluble, n.d. not determined Addition protocol 1: Solution of diisocyanate compound (A) is added to a solution of bisepoxide compound (B) and the catalyst (C) in a semi-batch process, the compound (D) is added in a second step according to example 14 in EP 16703330.7.

Addition protocol 2: A solution of the diisocyanate compound (A), the bisepoxide compound (B) and the compound (D) is added to the reactor containing the catalyst (C) dissolved in the solvent (E) comprising the solvent (E-1) according to claim 1 of the present application.

X(A): Conversion of isocyanates as compound (A) after step (β) estimated by IR spectroscopy of the reaction mixture.

PDI Polydispersity index (PDI) defined as ratio of the weight average molecular weight and the number average molecular weight determined by GPC Δwt% weight loss percentage of the sample after treatment at 240 °C, 260 °C and 280 °C for 1 h, respectively, with respect to the thermoplastic polyoxazolidinone (D) obtained in step (β), determined by TGA.

15

**Claims**

1. A process for producing thermoplastic polyoxazolidinones comprising copolymerization of a diisocyanate compound (A) with a bisepoxide compound (B) in the presence of a catalyst (C) and a compound (D) in a solvent (E) **characterized in that**,

   the bisepoxide compound (B) comprises isosorbide diglycidylether,
   the catalyst (C) is selected from the group consisting of alkali halogenides and earth alkali halogenides, and transition metal halogenides,
   the compound (D) is selected from the group consisting of monofunctional isocyanate, monofunctional epoxide, and
   wherein the process comprises the following steps

   (α) placing the solvent (E) and the catalyst (C) in a reactor to provide a mixture, and
   (β) adding the diisocyanate compound (A), the bisepoxide compound (B) and the compound (D) to the mixture resulting from step (α).

2. The process according to claim 1, wherein the diisocyanate compound (A), the bisepoxide compound (B) and the compound (D) of step (β) are added in a continuous manner to the mixture of step (α).

3. The process according to claim 1, wherein the diisocyanate compound (A), the bisepoxide compound (B) and the compound (D) of step (β) are added in a step-wise manner to the mixture of step (α).

4. The process according to claim 1, wherein the diisocyanate compound (A), the bisepoxide compound (B) and the compound (D) are mixed prior the addition to the mixture resulting from step (α).

5. The process according to claim 4, wherein the mixture of the diisocyanate compound (A), the bisepoxide compound (B) and the compound (D) of step (β) are added in a continuous manner to the mixture of step (α).

6. The process according to claim 4, wherein the mixture of the diisocyanate compound (A), the bisepoxide compound (B) and the compound (D) of step (β) are added in a step-wise manner with two or more individual addition steps to the mixture of step (α).

7. The process according to any one of claims 1 to 6, wherein the solvent (E) comprising a polar aprotic solvent (E-1).

8. The process according to any one of claims 1 to 7, wherein the catalyst (C) is at least one compound is selected from the group consisting of LiCl, LiBr, LiI, $MgCl_2$, $MgBr_2$, $MgI_2$, $SmI_3$, preferred LiCl, LiBr, and most preferred LiBr.

9. The process according to any one of claims 1 to 8, wherein the compound (D) is at least one compound is selected from the group consisting of phenyl glycidyl ether, o-kresyl glycidyl ether, m-kresyl glycidyl ether, p-kresyl glycidyl ether, 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidylether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefines, cyclohexene oxide, vinylcyclohexene monoxide, limonene monoxide, butadiene monoepoxide and/or N-glycidyl phthalimide and/or n-hexylisocyanate, 4-tert-butylphenyl glycidyl ether, cyclohexyl isocyanate, ω-chlorohexamethylene isocyanate, 2-ethyl hexyl isocyanate, n-octyl isocyanate, dodecyl isocyanate, stearyl isocyanate, methyl isocyanate, ethyl isocyanate, butyl isocyanate, isopropyl isocyanate, octadecyl isocyanate, 6-chloro-hexyl isocyanate, cyclohexyl isocyanate, 2,3,4-trimethylcyclohexyl isocyanate, 3,3,5-trimethylcyclohexyl isocyanate, 2-norbornyl methyl isocyanate, decyl isocyanate, dodecyl isocyanate, tetradecyl isocyanate, hexadecyl isocyanate, octadecyl isocyanate, 3-butoxypropyl isocyanate, 3 - (2-ethylhexyloxy)-propyl isocyanate, (trimethylsilyl)isocyanate, phenyl isocyanate, ortho-, meta-, para-tolyl isocyanate, chlorophenyl isocyanate (2,3,4-isomers), dichlorophenyl isocyanate, 4-nitrophenyl isocyanate, 3-trifluoromethylphenyl isocyanate, benzyl isocyanate, dimethylphenylisocyanate (technical mixture and individual isomers), 4-dodecylphenylisocyanat, 4-cyclohexyl-phenyl isocyanate, 4-pentyl-phenyl isocyanate, 4-t-butyl phenyl isocyanate, 1-naphthyl isocyanate.

10. The process according to any one of claims 7 to 9, wherein the polar aprotic solvent (E-1) is selected from the group consisting of sulfolane, dimethylsulfoxide, and gamma-butyrolactone.

11. A process for the production of thermoplastic polyoxazolidinone (O), wherein the polyoxazolidinone according to any one of claims 1 to 10 is further reacted with at least one compound (F), wherein the compound (F) is an alkylene oxide.

12. The process according claim 11, wherein the compound (F) is a monofunctional alkylene oxide (F-1) and/or polyfunctional alkylene oxide (F-2) preferred a monofunctional alkylene oxide (F-1).

13. The process according to claims 14, wherein the monofunctional alkylene oxide (F-1) is at least one compound selected from the group consisting of phenyl glycidyl ether, o-kresyl glycidyl ether, m-kresyl glycidyl ether, p-kresyl glycidyl ether, 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidylether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefines, cyclohexene oxide, vinylcyclohexene monoxide, limonene monoxide, butadiene monoepoxide N-glycidyl phthalimide, and 4-tert-butylphenyl glycidyl ether.

14. Thermoplastic polyoxazolidinone (O), obtainable by a process according to one of claims 11 to 14.

15. Thermoplastic polyoxazolidinone (O) according to claim 14 with a number average molecular weight $M_n$ from $\geq 500$ to $\leq 500'000$ g/mol, more preferred $\geq 1'000$ to $\leq 50'000$ g/mol and even more preferred $\geq 5'000$ to $\leq 25'0000$ g/mol as determined with gel permeation chromatography (GPC)), wherein the GPC was performed on an Agilent 1100 Series instrument with DMAC + LiBr (1.7 g·L$^{-1}$) as the eluent, PSS GRAM analytical columns (1 × 100 Å, 2 × 3000 Å) from PSS, equipped with a refractive index (RI) detector, wherein the column flow rate in all measurements was set to 1 mL·min$^{-1}$. For determining molecular weights, the calibration was performed with poly(styrene) standards (ReadyCal-Kit PS - Mp 370-2520000Da from PSS) and the samples were analysed using PSS WinGPC UniChrom V 8.2 Software.

**Patentansprüche**

1. Verfahren zur Herstellung von thermoplastischen Polyoxazolidinonen, umfassend die Copolymerisation einer Diisocyanatverbindung (A) mit einer Bisepoxidverbindung (B) in Gegenwart eines Katalysators (C) und einer Verbindung (D) in einem Lösungsmittel (E), **dadurch gekennzeichnet, dass** die Bisepoxidverbindung (B) Isosorbiddiglycidylether umfasst,

der Katalysator (C) aus der Gruppe bestehend aus Alkalihalogeniden und Erdalkalihalogeniden und Übergangsmetallhalogeniden ausgewählt wird,
die Verbindung (D) aus der Gruppe bestehend aus monofunktionellem Isocyanat und monofunktionellem Epoxid ausgewählt wird, und
wobei das Verfahren die folgenden Schritte umfasst:

($\alpha$) Eintragen des Lösungsmittels (E) und des Katalysators (C) in einen Reaktor zur Bereitstellung einer Mischung und
($\beta$) Zugeben der Diisocyanatverbindung (A), der Bisepoxidverbindung (B) und der Verbindung (D) zu der aus Schritt ($\alpha$) erhaltenen Mischung.

2. Verfahren nach Anspruch 1, bei dem die Diisocyanatverbindung (A), die Bisepoxidverbindung (B) und die Verbindung (D) von Schritt ($\beta$) kontinuierlich zu der Mischung aus Schritt ($\alpha$) gegeben werden.

3. Verfahren nach Anspruch 1, bei dem die Diisocyanatverbindung (A), die Bisepoxidverbindung (B) und die Verbindung (D) von Schritt ($\beta$) schrittweise zu der Mischung aus Schritt ($\alpha$) gegeben werden.

4. Verfahren nach Anspruch 1, bei dem die Diisocyanatverbindung (A), die Bisepoxidverbindung (B) und die Verbindung (D) vor der Zugabe zu der Mischung aus Schritt (α) gemischt werden.

5. Verfahren nach Anspruch 4, bei dem die Mischung der Diisocyanatverbindung (A), der Bisepoxidverbindung (B) und der Verbindung (D) aus Schritt (β) kontinuierlich zu der Mischung aus Schritt (α) gegeben wird.

6. Verfahren nach Anspruch 4, bei dem die Mischung der Diisocyanatverbindung (A), der Bisepoxidverbindung (B) und der Verbindung (D) aus Schritt (β) schrittweise mit zwei oder mehr individuellen Zugabeschritten zu der Mischung aus Schritt (α) gegeben wird.

7. Verfahren nach einem der Ansprüche 1 bis 6, bei dem das Lösungsmittel (E) ein polares aprotisches Lösungsmittel (E-1) umfasst.

8. Verfahren nach einem der Ansprüche 1 bis 7, bei dem es sich bei dem Katalysator (C) um mindestens eine Verbindung aus der Gruppe bestehend aus LiCl, LiBr, LiI, $MgCl_2$, $MgBr_2$, $MgI_2$, $SmI_3$, bevorzugt LiCl, LiBr und ganz besonders bevorzugt LiBr handelt.

9. Verfahren nach einem der Ansprüche 1 bis 8, bei dem es sich bei der Verbindung (D) um mindestens eine Verbindung aus der Gruppe bestehend aus Phenylglycidylether, o-Kresylglycidylether, m-Kresylglycidylether, p-Kresylglycidylether, 4-tert-Butylphenylglycidylether, Phenylglycidylether, 1-Naphthylglycidylether, 2-Naphthylglycidylether, 4-Chlorphenylglycidylether, 2,4,6-Trichlorphenylglycidylether, 2,4,6-Tribromphenylglycidylether, Pentafluorphenylglycidylether, Cyclohexylglycidylether, Benzylglycidylether, Glycidylbenzoat, Glycidylacetat, Glycidylcyclohexylcarboxylat, Methylglycidylether, Ethylglycidylether, Butylglycidylether, Hexylglycidylether, 2-Ethylhexylglycidylether, Octylglycidylether, C10-C18-Alkylglycidylether, Allylglycidylether, Ethylenoxid, Propylenoxid, Styroloxid, 1,2-Butenoxid, 2,3-Butenoxid, 1,2-Hexenoxid, Oxiden von C10-C18-alpha-Olefinen, Cyclohexenoxid, Vinylcyclohexenmonoxid, Limonenmonoxid, Butadienmonoepoxid und/oder N-Glycidylphthalimid und/oder n-Hexylisocyanat, 4-tert-Butylphenylglycidylether, Cyclohexylisocyanat, ω-Chlorhexamethylenisocyanat, 2-Ethylhexylisocyanat, n-Octylisocyanat, Dodecylisocyanat, Stearylisocyanat, Methylisocyanat, Ethylisocyanat, Butylisocyanat, Isopropylisocyanat, Octadecylisocyanat, 6-Chlorhexylisocyanat, Cyclohexylisocyanat, 2,3,4-Trimethylcyclohexylisocyanat, 3,3,5-Trimethylcyclohexylisocyanat, 2-Norbornylmethylisocyanat, Decylisocyanat, Dodecylisocyanat, Tetradecylisocyanat, Hexadecylisocyanat, Octadecylisocyanat, 3-Butoxypropylisocyanat, 3-(2-Ethylhexyloxy)propyl-isocyanat, (Trimethylsilyl)isocyanat, Phenylisocyanat, ortho-, meta-, para-Tolylisocyanat, Chlorphenylisocyanat(2,3,4-Isomere), Dichlorphenylisocyanat, 4-Nitrophenylisocyanat, 3-Trifluormethylphenylisocyanat, Benzylisocyanat, Dimethylphenylisocyanat (technisches Gemisch und einzelne Isomere), 4-Dodecylphenylisocyanat, 4-Cyclohexylphenylisocyanat, 4-Pentylphenylisocyanat, 4-t-Butylphenylisocyanat und 1-Naphthylisocyanat handelt.

10. Verfahren nach einem der Ansprüche 7 bis 9, bei dem das polare aprotische Lösungsmittel (E-1) aus der Gruppe bestehend aus Sulfolan, Dimethylsulfoxid und gamma-Butyrolacton ausgewählt wird.

11. Verfahren zur Herstellung von thermoplastischem Polyoxazolidinon (O), bei dem das Polyoxazolidinon nach einem der Ansprüche 1 bis 10 weiter mit mindestens einer Verbindung (F) umgesetzt wird, wobei es sich bei der Verbindung (F) um ein Alkylenoxid handelt.

12. Verfahren nach Anspruch 11, wobei es sich bei der Verbindung (F) um ein monofunktionelles Alkylenoxid (F-1) und/oder polyfunktionelles Alkylenoxid (F-2), bevorzugt ein monofunktionelles Alkylenoxid (F-1), handelt.

13. Verfahren nach Ansprüche 14, bei dem es sich bei dem monofunktionellen Alkylenoxid (F-1) um mindestens eine Verbindung aus der Gruppe bestehend aus Phenylglycidylether, o-Kresylglycidylether, m-Kresylglycidylether, p-Kresylglycidylether, 4-tert-Butylphenylglycidylether, Phenylglycidylether, 1-Naphthylglycidylether, 2-Naphthylglycidylether, 4-Chlorphenylglycidylether, 2,4,6-Trichlorphenylglycidylether, 2,4,6-Tribromphenylglycidylether, Pentafluorphenylglycidylether, Cyclohexylglycidylether, Benzylglycidylether, Glycidylbenzoat, Glycidylacetat, Glycidylcyclohexylcarboxylat, Methylglycidylether, Ethylglycidylether, Butylglycidylether, Hexylglycidylether, 2-Ethylhexylglycidylether, Octylglycidylether, C10-C18-Alkylglycidylether, Allylglycidylether, Ethylenoxid, Propylenoxid, Styroloxid, 1,2-Butenoxid, 2,3-Butenoxid, 1,2-Hexenoxid, Oxiden von C10-C18-alpha-Olefinen, Cyclohexenoxid, Vinylcyclohexenmonoxid, Limonenmonoxid, Butadienmonoepoxid, N-Glycidylphthalimid und 4-tert-Butylphenylglycidylether handelt.

14. Thermoplastisches Polyoxazolidinon (O), das durch ein Verfahren nach einem der Ansprüche 11 bis 14 erhältlich ist.

**15.** Thermoplastisches Polyoxazolidinon (O) nach Anspruch 14 mit einem zahlenmittleren Molekulargewicht $M_n$ von $\geq$ 500 bis $\leq$ 500.000 g/mol, weiter bevorzugt $\geq$ 1000 bis $\leq$ 50.000 g/mol und noch weiter bevorzugt $\geq$ 5.000 bis $\leq$ 25.0000 g/mol gemäß Bestimmung durch Gelpermeationschromatographie (GPC), wobei die GPC auf einem Instrument des Typs Agilent 1100 Series mit DMAC + LiBr (1,7 g·l$^{-1}$) als Elutionsmittel, analytischen PSS-GRAM-Säulen (1 × 100 Å, 2 × 3000 Å) von PSS mit Brechungsindexdetektor (RI-Detektor) durchgeführt wurde, wobei die Säulendurchflussrate bei allen Messungen auf 1 ml·min$^{-1}$ eingestellt wurde. Zur Bestimmung von Molekulargewichten wurde die Kalibrierung mit Poly(styrol)-Standards (ReadyCal-Kit PS - Mp 370-2520000 Da von PSS) durchgeführt, und die Proben wurden unter Verwendung von PSS WinGPC UniChrom V 8.2 Software analysiert.

**Revendications**

**1.** Procédé pour la production de polyoxazolidinones thermoplastiques comprenant la copolymérisation d'un composé de type diisocyanate (A) avec un composé de type bisépoxyde (B) en la présence d'un catalyseur (C) et d'un composé (D) dans un solvant (E) **caractérisé en ce que**,

le composé de type bisépoxyde (B) comprend de l'éther de diglycidyle d'isosorbide,
le catalyseur (C) est choisi dans le groupe constitué par des halogénures d'alcalin et des halogénures d'alcalino-terreux et des halogénures de métaux de transition,
le composé(D) est choisi dans le groupe constitué par un isocyanate monofonctionnel, un époxyde monofonctionnel, et
le procédé comprenant les étapes suivantes
($\alpha$) classement du solvant (E) et du catalyseur (C) dans un réacteur pour fournir un mélange, et
($\beta$) ajout du composé de type diisocyanate (A), du composé de type bisépoxyde (B) et du composé (D) au mélange résultant de l'étape ($\alpha$).

**2.** Procédé selon la revendication 1, le composé de type diisocyanate (A), le composé de type bisépoxyde (B) et le composé (D) de l'étape ($\beta$) étant ajoutés d'une manière continue au mélange de l'étape ($\alpha$).

**3.** Procédé selon la revendication 1, le composé de type diisocyanate (A), le composé de type bisépoxyde (B) et le composé (D) de l'étape ($\beta$) étant ajoutés d'une manière par étapes au mélange de l'étape ($\alpha$).

**4.** Procédé selon la revendication 1, le composé de type diisocyanate (A), le composé de type bisépoxyde (B) et le composé (D) étant mélangés avant l'ajout au mélange résultant de l'étape ($\alpha$).

**5.** Procédé selon la revendication 4, le mélange du composé de type diisocyanate (A), du composé de type bisépoxyde (B) et du composé (D) de l'étape ($\beta$) étant ajouté d'une manière continue au mélange de l'étape ($\alpha$).

**6.** Procédé selon la revendication 4, le mélange du composé de type diisocyanate (A), du composé de type bisépoxyde (B) et du composé (D) de l'étape ($\beta$) étant ajouté d'une manière par étapes avec deux étapes d'ajout individuelles ou plus au mélange de l'étape ($\alpha$).

**7.** Procédé selon l'une quelconque des revendications 1 à 6, le solvant (E) comprenant un solvant aprotique polaire (E-1).

**8.** Procédé selon l'une quelconque des revendications 1 à 7, le catalyseur (C) étant au moins un composé choisi dans le groupe constitué par LiCl, LiBr, LiI, MgCl$_2$, MgBr$_2$, MgI$_2$, SmI$_3$, de manière préférée LiCl, LiBr, et de la manière la plus préférée LiBr.

**9.** Procédé selon l'une quelconque des revendications 1 à 8, le composé (D) étant au moins un composé choisi dans le groupe constitué par l'éther de glycidyle de phényle, l'éther de glycidyle de o-crésyle, l'éther de glycidyle de m-crésyle, l'éther de glycidyle de p-crésyle, l'éther de glycidyle de 4-tert-butylphényle, l'éther de glycidyle de phényle, l'éther de glycidyle de 1-naphtyle, l'éther de glycidyle de 2-naphtyle, l'éther de glycidyle de 4-chlorophényle, l'éther de glycidyle de 2,4,6-trichlorophényle, l'éther de glycidyle de 2,4,6-tribromophényle, l'éther de glycidyle de pentafluorophényle, l'éther de glycidyle de cyclohexyle, l'éther de glycidyle de benzyle, le benzoate de glycidyle, l'acétate de glycidyle, le cyclohexylcarboxylate de glycidyle, l'éther de glycidyle de méthyle, l'éther de glycidyle d'éthyle, l'éther de glycidyle de butyle, l'éther de glycidyle d'hexyle, l'éther de glycidyle de 2-éthylhexyle, l'éther de glycidyle d'octyle, l'éther de glycidyle d'alkyle en C10 à C18, l'éther de glycidyle d'allyle, l'oxyde d'éthylène, l'oxyde de propylène, l'oxyde de styrène, l'oxyde de 1,2-butène, l'oxyde de 2,3-butène, l'oxyde de 1,2-hexène, des oxydes d'alpha-oléfines en C10 à C18, l'oxyde de cyclohexène, le monoxyde de vinylcyclohexène, le monoxyde de limonène, le monoépoxyde de butadiène et/ou le N-glycidylphtalimide et/ou l'isocyanate de n-hexyle, l'éther de 4-tert-butylphényle de glycidyle, l'isocyanate de cyclohexyle, l'isocyanate de ω-chlorohexaméthylène, l'isocyanate de 2-éthylhexyle, l'isocyanate de n-octyle, l'isocyanate de dodécyle, l'isocyanate de stéaryle, l'isocyanate de méthyle, l'isocyanate d'éthyle, l'isocyanate de butyle, l'isocyanate d'isopropyle, l'isocyanate d'octadécyle, l'isocyanate de 6-chloro-hexyle, l'isocyanate de cyclohexyle, l'isocyanate de 2,3,4-triméthylcyclohexyle, l'isocyanate de 3,3,5-triméthylcyclohexyle, l'isocyanate de 2-norbornylméthyle, l'isocyanate de décyle, l'isocyanate de dodécyle, l'isocyanate de tétradécyle, l'isocyanate d'hexadécyle, l'isocyanate d'octadécyle, l'isocyanate de 3-butoxypropyle, l'isocyanate de 3-(2-éthylhexyloxy)-propyle, l'isocyanate de (triméthylsilyle), l'isocyanate de phényle, l'isocyanate d'*ortho*-tolyle, l'isocyanate de *méta*-tolyle, l'isocyanate de para-tolyle, l'isocyanate de chlorophényle (isomères 2,3,4), l'isocyanate de dichlorophényle, l'isocyanate de 4-nitrophényle, l'isocyanate de 3-trifluorométhylphényle, l'isocyanate de benzyle, l'isocyanate de diméthylphényle (mélange technique et isomères individuels), l'isocyanate de 4-dodécylphényle, l'isocyanate de 4-cyclohexyl-phényle, l'isocyanate de 4-pentyl-phényle, l'isocyanate de 4-t-butylphényle, l'isocyanate de 1-naphtyle.

10. Procédé selon l'une quelconque des revendications 7 à 9, le solvant aprotique polaire (E-1) étant choisi dans le groupe constitué par le sulfolane, le diméthylsulfoxyde et la gamma-butyrolactone.

11. Procédé pour la production d'une polyoxazolidinone thermoplastique (O), la polyoxazolidinone selon l'une quelconque des revendications 1 à 10 étant en outre mise à réagir avec au moins un composé (F), le composé (F) étant un oxyde d'alkylène.

12. Procédé selon la revendication 11, le composé (F) étant un oxyde d'alkylène monofonctionnel (F-1) et/ou un oxyde d'alkylène polyfonctionnel (F-2), de manière préférée un oxyde d'alkylène monofonctionnel (F-1).

13. Procédé selon les revendications 14, l'oxyde d'alkylène monofonctionnel (F-1) étant au moins un composé choisi dans le groupe situé par l'éther de glycidyle de phényle, l'éther de glycidyle de o-crésyle, l'éther de glycidyle de m-crésyle, l'éther de glycidyle de p-crésyle, l'éther de glycidyle de 4-tert-butylphényle, l'éther de glycidyle de phényle, l'éther de glycidyle de 1-naphtyle, l'éther de glycidyle de 2-naphtyle, l'éther de glycidyle de 4-chlorophényle, l'éther de glycidyle de 2,4,6-trichlorophényle, l'éther de glycidyle de 2,4,6-tribromophényle, l'éther de glycidyle de pentafluorophényle, l'éther de glycidyle de cyclohexyle, l'éther de glycidyle de benzyle, le benzoate de glycidyle, l'acétate de glycidyle, le cyclohexylcarboxylate de glycidyle, l'éther de glycidyle de méthyle, l'éther de glycidyle d'éthyle, l'éther de glycidyle de butyle, l'éther de glycidyle d'hexyle, l'éther de glycidyle de 2-éthylhexyle, l'éther de glycidyle d'octyle, l'éther de glycidyle d'alkyle en C10 à C18, l'éther de glycidyle d'allyle, l'oxyde d'éthylène, l'oxyde de propylène, l'oxyde de styrène, l'oxyde de 1,2-butène, l'oxyde de 2,3-butène, l'oxyde de 1,2-hexène, des oxydes d'alpha-oléfines en C10 à C18, l'oxyde de cyclohexène, le monoxyde de vinylcyclohexène, le monoxyde de limonène, le monoépoxyde de butadiène, le N-glycidylphtalimide et l'éther de glycidyle de 4-tert-butylphényle.

14. Polyoxazolidinone thermoplastique (O), pouvant être obtenue par un procédé selon l'une des revendications 11 à 14.

15. Polyoxazolidinone thermoplastique (O) selon la revendication 14 dotée d'un poids moléculaire moyen en nombre $M_n$ de $\leq 500$ à $\leq 500\ 000$ g/mole, de manière plus préférée $\leq 1\ 000$ à $\leq 50\ 000$ g/mole et de manière encore plus préférée $\leq 5\ 000$ à $\leq 25\ 0000$ g/mole tel que déterminé par chromatographie à perméation de gel (GPC), la GPC ayant été réalisée sur un appareil Agilent 1100 Series avec DMAC + LiBr ($1,7$ g·L$^{-1}$) comme éluant, des colonnes analytiques PSS GRAM ($1 \times 100$ Å, $2 \times 3\ 000$ Å) de PSS, équipé d'un détecteur d'indice de réfraction (RI), le débit de colonnes dans toutes les mesures ayant été fixé à 1 mL.min$^{-1}$. Pour la détermination de poids moléculaires, l'étalonnage *a* été réalisé avec des références de poly(styrène) (ReadyCal-Kit PS - Mp 370-2520000Da de PSS) et les échantillons ont été analysés en utilisant le logiciel PSS WinGPC UniChrom V 8.2.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 16703330
- WO 2018141743 A1
- WO 9955772 A

**Non-patent literature cited in the description**

- **M. E. DYEN ; D. SWERN.** *Chem. Rev.,* 1967, vol. 67, 197
- *J. Polym. Sci.,* 1970, vol. 8, 2759-2773
- Plastics Additives Handbook. Hanser Publishers, 2000